# EUROPÄISCHE PATENTSCHRIFT

(11) **EP 3 384 296 B1**
(45) Veröffentlichungstag und Bekanntmachung des Hinweises auf die Patenterteilung: **15.01.2020**
(21) Anmeldenummer: 16801191.4
(22) Anmeldetag: 24.11.2016
(51) Int. Cl.: G01P 15/097, G01P 15/09

(54) **BESCHLEUNIGUNGS-MESSGERÄT UND VERFAHREN ZUR HERSTELLUNG EINES SOLCHEN BESCHLEUNIGUNGS-MESSGERÄTES**
SENSOR FOR MEASURING ACCELERATION AND METHOD FOR MANUFACTURING SUCH A SENSOR FOR MEASURING ACCELERATION
APPAREIL DE MESURE D'ACCELERATION ET PROCEDE DE FABRICATION D'UN TEL APPAREIL DE MESURE D'ACCELERATION

(30) Priorität: 04.12.2015 WO PCT/EP2015/198027
(43) Veröffentlichungstag der Anmeldung: 10.10.2018
(73) Patentinhaber: Kistler Holding AG, 8408 Winterthur (CH)
(72) Erfinder: ROSA, Flavio, 5400 Baden (CH)
(86) Internationale Anmeldenummer: PCT/EP2016/078608
(87) Internationale Veröffentlichungsnummer: WO 2017/093099

(56) Entgegenhaltungen:
- DE-A1- 2 712 359
- US-A- 3 744 322

## Beschreibung

### Technisches Gebiet

Die Erfindung betrifft ein Beschleunigungs-Messgerät nach dem Oberbegriff des unabhängigen Anspruchs sowie ein Verfahren zur Herstellung eines solchen Beschleunigungs-Messgerätes.

### Stand der Technik

Die Schrift CH399021A zeigt ein Beschleunigungs-Messgerät mit einem piezoelektrischen System, einer seismischen Masse, einer Vorspannhülse und einer Grundplatte. Das piezoelektrische System ist mittels der Vorspannhülse zwischen der seismischen Masse und der Grundplatte mechanisch vorgespannt. Bei Beschleunigung übt die seismische Masse eine ihrer Beschleunigung proportionale Kraft auf das piezoelektrische System aus. Durch die mechanische Vorspannung werden sowohl positive als auch negative Beschleunigungen erfasst. Die Kraft wiederum erzeugt im piezoelektrischen System piezoelektrische Ladungen, welche als Beschleunigungssignale elektrisch ableitbar sind. Die Beschleunigungssignale sind proportional zur Grösse der Kraft. Elektrisch abgeleitete Beschleunigungssignale lassen sich in einer Auswerteeinheit elektrisch verstärken und auswerten.

Ein solches Beschleunigungs-Messgerät zum Messen von Schock und Vibration wird von der Anmelderin unter der Typenbezeichnung 8002K kommerziell vertrieben. Das Beschleunigungs-Messgerät ist in einem mechanisch stabilen Gehäuse aus rostfreiem Stahl angeordnet. Laut Datenblatt 8002_00_205d_07.05 wiegt es 20Gramm ist über einen Montagebolzen an beliebigen Messobjekten anbringbar. Der Messbereich liegt im Bereich von ±1000g, die Resonanzfrequenz beträgt 40kHz und die Betriebstemperatur reicht von -70°C bis +120°C.

Eine erste Aufgabe der vorliegenden Erfindung ist es, dieses bekannte Beschleunigungs-Messgerät zu verbessern. Eine weitere Aufgabe der Erfindung besteht darin, ein kostengünstiges Verfahren zur Herstellung eines solchen Beschleunigungs-Messgerätes aufzuzeigen.

### Darstellung der Erfindung

Die erste Aufgabe wird durch die Merkmale des unabhängigen Anspruchs gelöst.

Die Erfindung betrifft ein Beschleunigungs-Messgerät mit einem piezoelektrischen System, einer seismischen Masse und einer Vorspannanordnung; bei Beschleunigung übt die seismische Masse eine ihrer Beschleunigung proportionale Kraft auf das piezoelektrische System aus, welche Kraft im piezoelektrischen System piezoelektrische Ladungen erzeugt, und welche piezoelektrischen Ladungen als Beschleunigungssignale elektrisch ableitbar sind, wobei das piezoelektrische System zwei Systemelemente aufweist; wobei die seismische Masse zwei Masseelemente aufweist; und wobei die Vorspannanordnung die Systemelemente gegen die Masseelemente mechanisch vorspannt.

Der Vorteil der aus zwei Masseelementen bestehenden seismischen Masse liegt darin, dass das piezoelektrische System nur zwischen den Masseelementen mechanisch vorspannbar ist und dass zum Erzielen der mechanischen Vorspannung keine weiteren Bauteile wie eine Grundplatte nötig sind. Die Vorspannanordnung spannt das zwei Systemelemente aufweisende piezoelektrische System gegen die Masseelemente mechanisch vor. Eine so resultierende piezoelektrische Aufnehmergruppe ist vor einer Montage im Gehäuse des Beschleunigungs-Messgerätes elektrisch und mechanisch testbar und lagerbar. Im Ergebnis ist das Beschleunigungs-Messgerät so kostengünstig herstellbar.

### Kurze Beschreibung der Zeichnungen

Im Folgenden wird eine Ausführungsform der Erfindung beispielhaft unter Beizug der Figuren näher erklärt. Es zeigen
- Fig. 1: einen Schnitt durch einen Teil des Beschleunigungs-Messgerätes;
- Fig. 2: eine perspektivische Ansicht eines Teiles des Beschleunigungs-Messgerätes nach Fig. 1 ohne Vorspannanordnung, Gehäuse und Abdeckung;
- Fig. 3: ein Schnitt durch eine piezoelektrische Aufnehmergruppe des Beschleunigungs-Messgerätes nach Fig. 1 oder 2 vor der mechanischen Vorspannung mittels der Vorspannanordnung;
- Fig. 4: der Schnitt durch die piezoelektrische Aufnehmergruppe nach Fig. 3 nach der mechanischen Vorspannung mittels der Vorspannanordnung;
- Fig. 5: ein Schema der elektrische Verbindung des piezoelektrischen Systems mit der seismischen Masse des Beschleunigungs-Messgerätes nach Fig. 1 oder 2;
- Fig. 6: eine perspektivische Ansicht einer Elektrode des piezoelektrischen Systems des Beschleunigungs-Messgerätes nach Fig. 1 oder 2;
- Fig. 7: ein Schnitt durch einen Teil des Beschleunigungs-Messgerätes nach Fig. 1 oder 2 mit elektrischen Kontakten und Signalkabel;
- Fig. 8: eine perspektivische Ansicht des Beschleunigungs-Messgerätes nach Fig. 7 vor Montage der Schutzhülse; und
- Fig. 9: die perspektivische Ansicht des Beschleunigungs-Messgerätes nach Fig. 8 nach Montage der Schutzhülse.

### Wege zur Ausführung der Erfindung

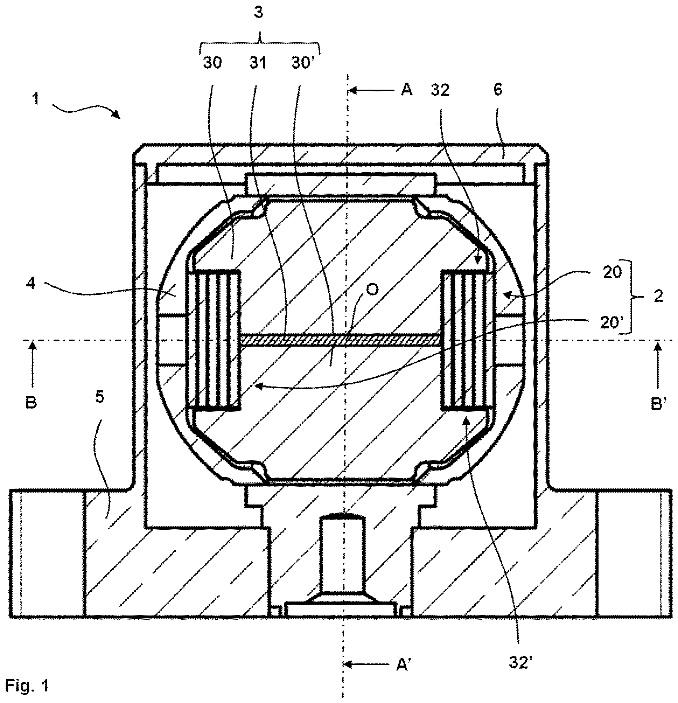

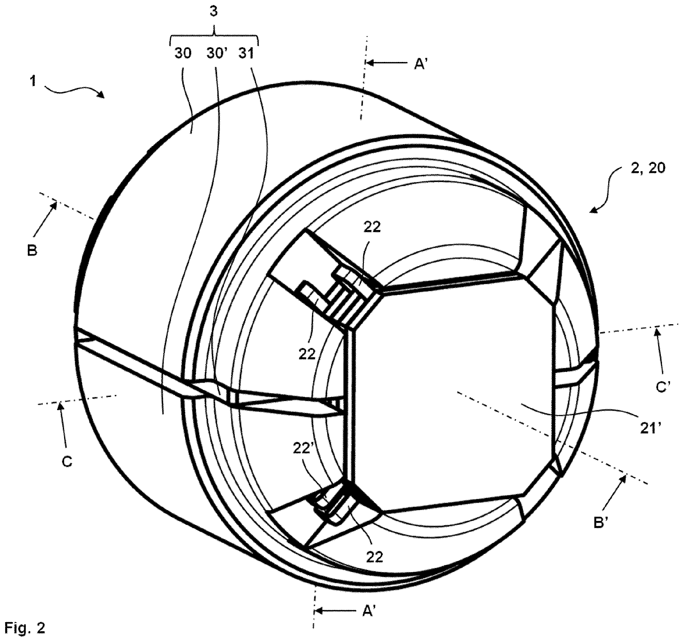

Fig. 1 zeigt einen Schnitt durch einen Teil einer Ausführungsform des Beschleunigungs-Messgerätes 1. Der Schnitt erfolgt entlang Vertikalachse AA' und einer Längsachse BB'. Eine Horizontalachse CC' des Beschleunigungs-Messgerätes 1 ist in dessen perspektivischer Ansicht nach Fig. 2 dargestellt. Die drei Achsen stehen senkrecht aufeinander und schneiden sich in einem Mittelpunkt O des Beschleunigungs-Messgerätes 1.

Das Beschleunigungs-Messgerät 1 weist ein Gehäuse 5 und eine Abdeckung 6 aus mechanisch beständigem Material wie aus Reinmetallen, Nickellegierungen, Kobaltlegierungen, Eisenlegierungen, usw. auf. Bezüglich der Vertikalachse AA' ist das Gehäuse 5 im Querschnitt hohlzylinderförmig und die Abdeckung 6 ist im Querschnitt kreisförmig. Bei Kenntnis der vorliegenden Erfindung kann der Fachmann auch ein Gehäuse und eine Abdeckung mit anderen Querschnittsformen wie ein Vieleck, usw. vorsehen. Gehäuse 5 und Abdeckung 6 sind mechanisch miteinander verbunden. Die mechanische Verbindung erfolgt durch Stoffschluss wie Schweissen, Diffusionsschweissen, Thermokompressionsbonden, Löten, usw.. Gehäuse 5 und Abdeckung 6 schützen das Beschleunigungs-Messgerät 1 vor schädlichen Umwelteinflüssen wie Verunreinigungen (Staub, Feuchtigkeit, usw.) und vor elektrischen und elektromagnetischen Störeffekten in Form von elektromagnetischer Strahlung.

Das Beschleunigungs-Messgerät 1 weist eine seismische Masse 3 auf. Die seismische Masse 3 ist kugelförmig und um den Mittelpunkt O angeordnet und weist mehrere, vorzugsweise zwei Masseelemente 30, 30' und eine elektrische Isolation 31 auf. Die Masseelemente 30, 30' bestehen aus mechanisch beständigem Material wie aus Reinmetallen, Nickellegierungen, Kobaltlegierungen, Eisenlegierungen, usw.. Die elektrische Isolation 31 besteht aus elektrisch isolierendem und mechanisch steifem Material wie Keramik, Al₂O₃-Keramik, Saphir, usw.. Bezüglich der Vertikalachse AA' sind die Masseelemente 30, 30' im Querschnitt zylinderförmig und die elektrische Isolation 31 ist im Querschnitt rechteckig. Bei Kenntnis der vorliegenden Erfindung kann der Fachmann auch Masseelemente und eine elektrische Isolation mit anderen Querschnittsformen wie ein Vieleck, ein Kreis, usw. vorsehen. Die Masseelemente 30, 30' sind vorzugsweise Gleichteile. Bezüglich der Vertikalachse AA' ist die elektrische Isolation 31 zwischen den Masseelementen 30, 30' angeordnet und isoliert die Masseelemente 30, 30' elektrisch gegeneinander. Die Masseelemente 30, 30' und die elektrische Isolation 31 sind im direkten mechanischen Kontakt. Ein Isolationswiderstand der elektrischen Isolation 31 ist grösser/gleich 10¹⁰Ω. Die Masseelemente 30, 30' sind aufgrund ihrer räumlichen Ausdehnung elektrisch und mechanisch einfach verbindbar. Die Masseelemente 30, 30' weisen an ihren längsachsigen Enden Aussparungen 32, 32' auf. Bezüglich der Längsachse BB' sind die Aussparungen 32, 32' im Querschnitt rechteckig. Auch hier kann der Fachmann bei Kenntnis der Erfindung andere Querschnittsformen wie ein Kreis, usw. vorsehen.

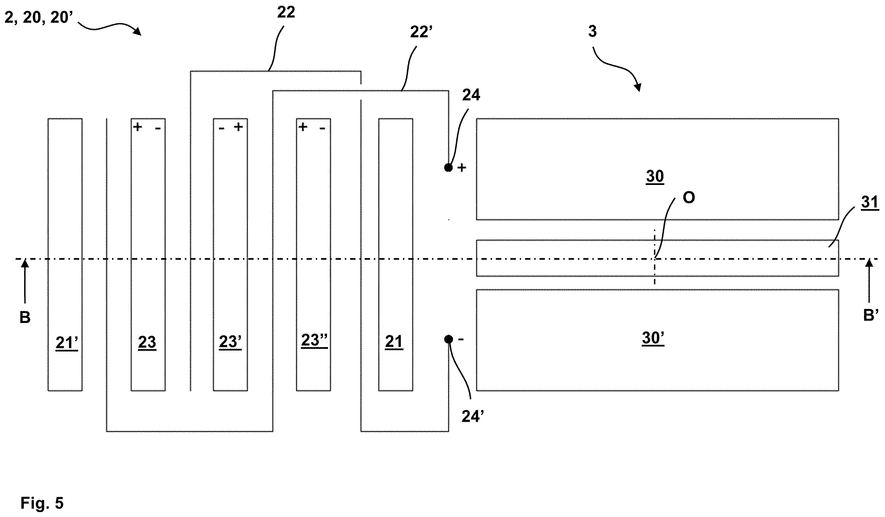

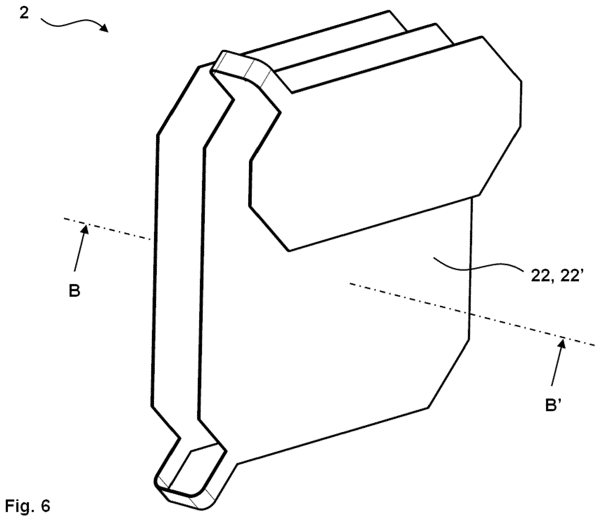

Das Beschleunigungs-Messgerät 1 weist ein piezoelektrisches System 2. Das piezoelektrische System 2 weist mehrere, vorzugsweise zwei Systemelemente 20, 20' auf. Die Systemelemente 20, 20' sind identisch aufgebaut. Der Aufbau der Systemelemente 20, 20' ist im Schema nach Fig. 5 dargestellt. Jedes Systemelement 20, 20' weist mehrere elektrische Isolatorelemente 21, 21', mehrere Elektroden 22, 22' und mehrere piezoelektrische Elemente 23, 23', 23" auf. Jedes Systemelement 20, 20' weist vorzugsweise zwei elektrische Isolatorelemente 21, 21' auf. Die elektrischen Isolatorelemente 21, 21' sind bezüglich der Längsachse BB' im Querschnitt rechteckig und bestehen aus elektrisch isolierendem und mechanisch steifem Material wie Keramik, Al₂O₃-Keramik, Saphir, usw.. Ein Isolationswiderstand der elektrischen Isolatorelemente 21, 21' ist grösser/gleich 10¹⁰Ω. Auch die Elektroden 22, 22' sind bezüglich der Längsachse BB' im Querschnitt rechteckig und bestehen aus elektrisch leitfähigem Material wie aus Reinmetallen, Nickellegierungen, Kobaltlegierungen, Eisenlegierungen, usw.. Fig. 6 zeigt eine perspektivische Ansicht einer Elektrode 22, 22'. Jedes Systemelement 20, 20' weist vorzugsweise zwei Elektroden 22, 22' auf. Jede Elektrode 22, 22' ist einstückig und weist mehrere, vorzugsweise drei Elektrodenflächen auf, die über mehrere, vorzugsweise zwei Gelenke mechanisch miteinander verbunden sind. Die Elektrode 22, 22' sammelt mit den Elektrodenflächen piezoelektrische Ladungen von mehreren, vorzugsweise drei piezoelektrischen Elementen 23, 23', 23" auf. Die piezoelektrischen Elemente 23, 23', 23" sind bezüglich der Längsachse BB' im Querschnitt rechteckig und bestehen aus piezoelektrischem Material wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, Piezokeramik, usw.. Die piezoelektrischen Elemente 23, 23', 23" sind kristallographisch so orientiert geschnitten, dass sie eine hohe Empfindlichkeit für die aufzunehmende Kraft haben. Vorzugsweise weist das piezoelektrische Material eine hohe Empfindlichkeit für den longitudinalen oder den transversalen Schubeffekt auf. Dabei sind die piezoelektrischen Elemente 23, 23', 23" so orientiert, dass negative und positive piezoelektrische Ladungen auf Oberflächen erzeugt werden, die senkrecht oder parallel zu einer Schubspannungsachse stehen. Die negativen und positiven piezoelektrischen Ladungen sind in Fig. 5 als + und - dargestellt. Diese piezoelektrischen Ladungen sind als Beschleunigungssignale elektrisch abgreifbar. Bei Kenntnis der vorliegenden Erfindung kann der Fachmann für die elektrischen Isolatorelemente, die Elektroden und die piezoelektrischen Elemente andere Querschnittsformen wie ein Kreis, usw. vorsehen.

Im Schema des piezoelektrischen Systems 2 nach Fig. 5 sind drei piezoelektrische Elemente 23, 23', 23" zwischen zwei elektrischen Isolatorelementen 21, 21' angeordnet. Ein erstes elektrisches Isolatorelement 21 ist dem Mittelpunkt O zugewandt und ein zweites elektrisches Isolatorelement 21' ist vom Mittelpunkt O abgewandt. Diese fünf Elemente sind in den Fig. 1 bis 4 als Stapel dargestellt und in den Aussparungen 32, 32' angeordnet. Die Aussparungen 32, 32' sind so dimensioniert, dass sie die Systemelemente 20, 20' weitgehend vollständig aufnehmen. Das Adjektiv "weitgehend" beinhaltet eine Ungenauigkeit von ±10%. Somit sind das piezoelektrische System 2 und die seismische Masse 3 platzsparend, d.h. das piezoelektrische System 2 ist unter grösstmöglicher Raumnutzung innerhalb einer Kugeloberfläche der seismischen Masse 3 angeordnet.

Zwei Elektroden 22, 22' sind mit ihren drei Elektrodenflächen an den Oberflächen der piezoelektrischen Elementen 23, 23', 23" angeordnet. Die Elektroden 22, 22' sind vorzugsweise Gleichteile. Eine positive Elektrode 22 nimmt positive piezoelektrische Ladungen von den Oberflächen der piezoelektrischen Elemente 23, 23', 23" auf, eine negative Elektrode 22' nimmt negative piezoelektrische Ladungen von den Oberflächen der piezoelektrischen Elemente 23, 23', 23" auf. Jeweils ein Ende 24, 24' der Elektroden 22, 22' ist mit einem Masseelement 30, 30' elektrisch und mechanisch verbunden. Die positive Elektrode 22 ist über ihr Ende 24 mit dem bezüglich des Mittelpunktes O und der Vertikalachse AA' oberen ersten Masselement 30 elektrisch und mechanisch verbunden. Die negative Elektrode 22' ist über ihr Ende 24' mit dem bezüglich des Mittelpunktes O und der Vertikalachse AA' unteren zweiten Masselement 30' elektrisch und mechanisch verbunden. Die elektrischen und mechanischen Verbindungen erfolgen durch Kraftschluss wie Pressung, Haftreibung, usw. auf Oberflächen der Masseelemente 30, 30'. Die Elektroden 22, 22' greifen somit die negativen und positiven piezoelektrischen Ladungen als Beschleunigungssignale elektrisch ab und leiten sie elektrisch an die Masseelemente 30, 30' ab.

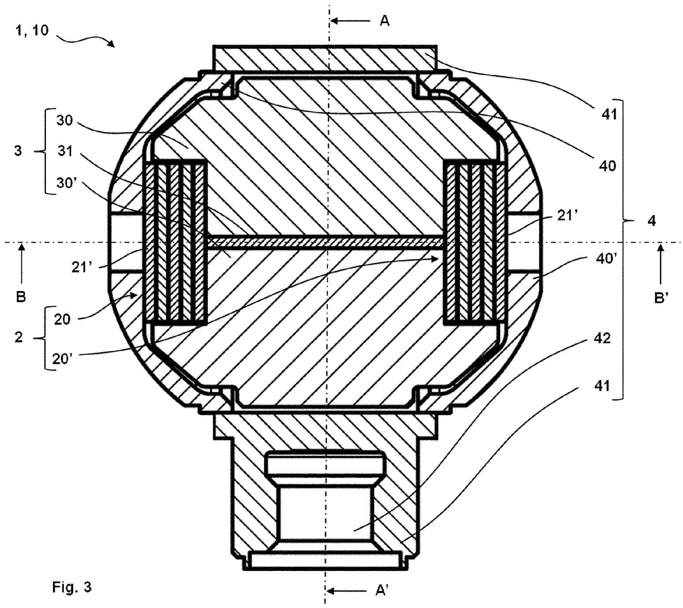

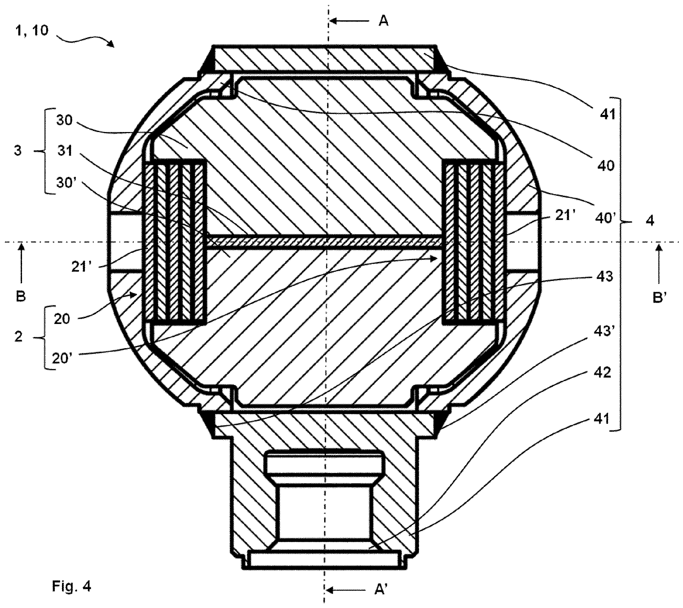

Das Beschleunigungs-Messgerät 1 weist eine Vorspannanordnung 4 auf, die aus zwei Kappen 40, 40' und einer Hülse 41 besteht. Wie in Fig. 3 und 4 dargestellt, sind die Kappen 40, 40' bezüglich der Längsachse BB' im Querschnitt schalenförmig und die Hülse 41 ist bezüglich der Längsachse BB' im Querschnitt hohlzylinderförmig. Die Vorspannanordnung 4 besteht aus mechanisch steifem Material wie aus Reinmetallen, Nickellegierungen, Kobaltlegierungen, Eisenlegierungen, usw.. Bei Kenntnis der vorliegenden Erfindung kann der Fachmann auch Kappen und eine Hülse mit anderen Querschnittsformen wie ein Vieleck, usw. vorsehen. Die Kappen 40, 40' sind vorzugsweise Gleichteile. Die Hülse 41 weist ein Befestigungselement 42 auf. Mit dem Befestigungselement 42 erfolgt eine mechanische Verbindung mit einem nicht dargestellten Messobjekt. Die mechanische Verbindung ist eine mechanisch kraftschlüssige Verbindung wie ein Schraubverbindung, usw..

Die Vorspannanordnung 4 umschliesst die seismische Masse 3 und das piezoelektrische System 2 weitgehend vollständig. Je eine Kappe 40, 40' umschliesst bereichsweise eine Aussenseite der seismischen Masse 3. Bezüglich des Mittelpunktes O und der Längsachse BB' umschliesst linksseitig eine erste Kappe 40 bereichsweise eine erste Aussenseite der seismischen Masse 3 und rechtsseitig umschliesst eine zweite Kappe 40' bereichsweise eine zweite Aussenseite der seismischen Masse 3. Bezüglich des Mittelpunktes O und der Längsachse BB' umschliesst die Hülse 41 einen mittleren Bereich der seismischen Masse 3. Die Kappen 40, 40' und die Hülse 41 überlappen sich bereichsweise. Bezüglich des Mittelpunktes O und der Längsachse BB' überlappt linksseitig die erste Kappe 40 einen ersten Endbereich der Hülse 41 und rechtsseitig überlappt die zweite Kappe 40' einen zweiten Endbereich der Hülse 41. Im Bereich der Systemelemente 20, 20' sind die Kappen 40, 40' im direkten mechanischen Kontakt mit den Systemelementen 20, 20'. Bezüglich des Mittelpunktes O und der Längsachse BB' ist linksseitig die erste Kappe 40 im mechanischen Kontakt mit einem zweiten elektrischen Isolatorelement 21' des ersten Systemelementes 20 und rechtsseitig ist die zweite Kappe 40' im mechanischen Kontakt mit einem zweiten elektrischen Isolatorelement 21' des zweiten Systemelementes 20'. Dieser mechanische Kontakt ist ein flächiger Kontakt über jeweils eine vom Mittelpunkt O abgewandte Aussenseite der zweiten elektrischen Isolatorelemente 21'. Zum Erzielen einer mechanischen Vorspannung wird eine Spannkraft flächig in die Aussenseiten der zweiten elektrischen Isolatorelemente 21' eingeleitet. Verglichen mit dem Stand der Technik der Schrift CH399021A ist die Querschnittsfläche, in welche die Spannkraft eingeleitet wird, wesentlich grösser. Die Spannhülse der Schrift CH399021A leitet die Spannkraft über einen ringförmigen Absatz mit kleiner Querschnittsfläche in die seismische Masse ein. Aufgrund der wesentlich grösseren Querschnittsfläche lässt sich erfindungsgemäss eine entsprechend grössere Spannkraft einleiten, vorzugsweise ist die Spannkraft 100% grösser, vorzugsweise ist sie 500% grösser als im Stand der Technik nach dem Datenblatt 8002_00_205d_07.05.

Die Fig. 3 und 4 zeigen im Schnitt Verfahrensschritte zur mechanischen Vorspannung des piezoelektrischen Systems 2. In einem ersten Verfahrensschritt wird die elektrische Isolation 31 bezüglich der Vertikalachse AA' zwischen den Masseelementen 30, 30' angeordnet. Daraufhin werden die Systemelemente 20, 20' bezüglich der Vertikalachse AA' zwischen den Masseelementen 30, 30' in den Aussparungen 32, 32' angeordnet. In einem weiteren Schritt wird ein Ende einer jeden Elektrode 22, 22' mit einem Masseelemente 30, 30' elektrisch und mechanisch verbunden. Nun werden die Kappen 40, 40' und die Hülse 41 über die seismische Masse 3 gelegt. Dabei überlappen die Kappen 40, 40' die Endbereiche der Hülse 41. In noch einem weiteren Verfahrensschritt spannen die Kappen 40, 40' die Systemelemente 20, 20' gegen die Masseelemente 30, 30' mechanisch vor. In diesem mechanisch angespannten Zustand werden die Kappen 40, 40' in den Endbereichen der Hülse 41 mit der Hülse 41 stoffschlüssig verbunden. Die stoffschlüssige Verbindung erfolgt durch Schweissen, Diffusionsschweissen, Thermokompressionsbonden, Löten, usw.. Nach Fig. 4 sind die Kappen 40, 40' jeweils über ringförmige Schweissnähte 43, 43' mit der Hülse 41 mechanisch verbunden. Die Schweissnähte 43, 43' sind für ein Fügewerkzeug gut zugänglich und somit einfach herzustellen. Auch sind die Schweissnähte 43, 43' an radialen Enden der schalenförmigen Kappen 40, 40' angebracht und weisen somit einen verhältnismässig grossen Radius auf, wodurch Schweisseigenspannungen gering sind.

Das piezoelektrische System 2, die seismische Masse 3 und die Vorspannanordnung 4 bilden eine piezoelektrische Aufnehmergruppe 10. Die piezoelektrische Aufnehmergruppe 10 ist vor einer Montage im Gehäuse 5 elektrisch und mechanisch testbar und lagerbar.

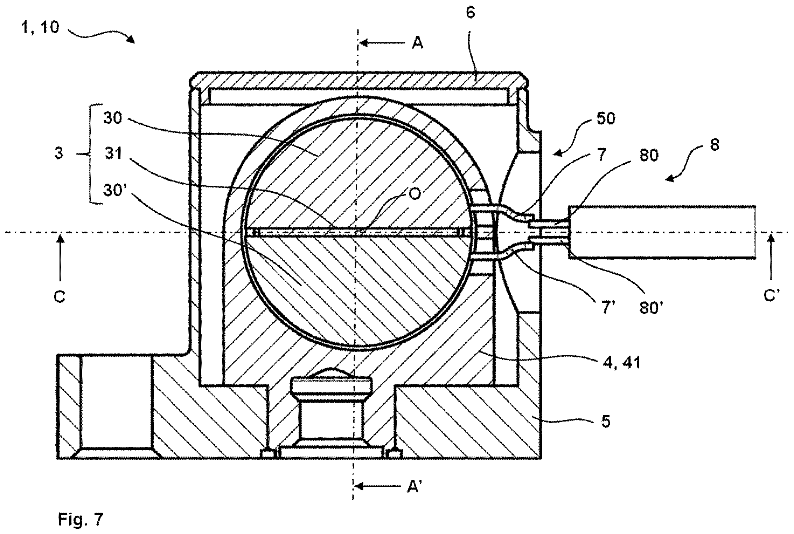

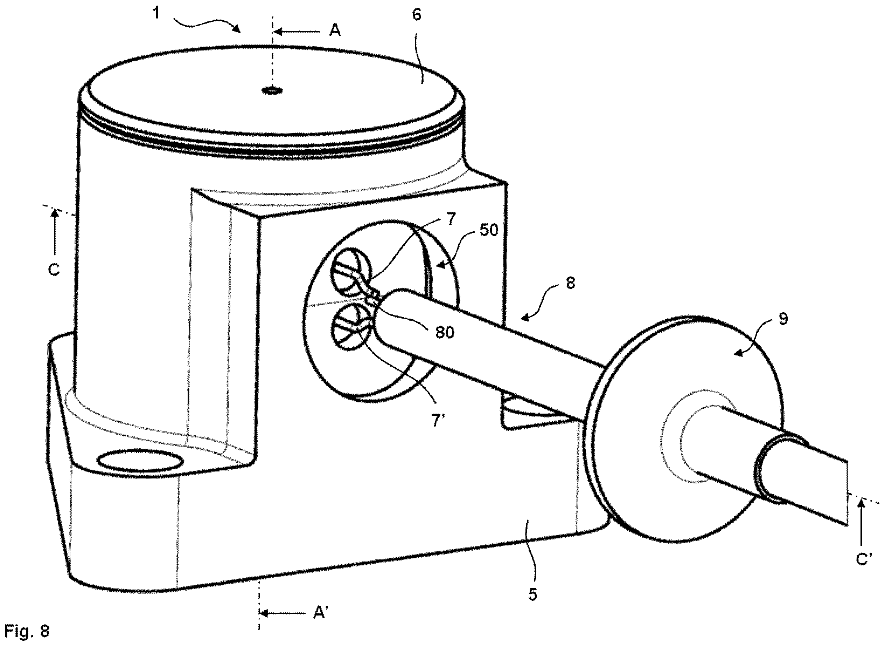

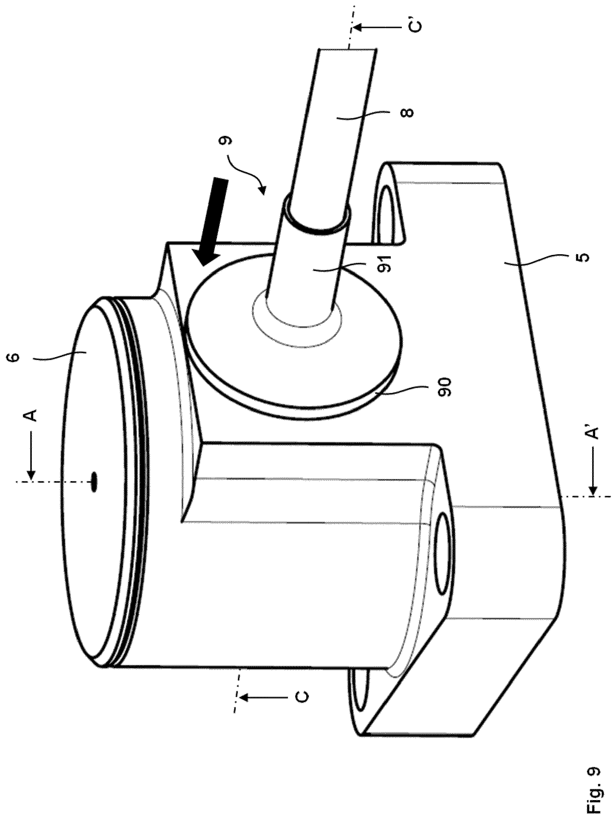

Fig. 7 zeigt einen Schnitt entlang der Horizontalachse CC' durch einen Teil der Ausführungsform des Beschleunigungs-Messgerätes 1 nach Fig. 1 und 2. Fig. 8 und 9 zeigen dazu perspektivische Ansichten. Die piezoelektrische Aufnehmergruppe 10 wird im Gehäuse 5 montiert. Dazu wird in einem ersten Verfahrensschritt die piezoelektrische Aufnehmergruppe 10 in das Gehäuse 5 gesetzt und im Bereich der Hülse 41 mit einem bezüglich des Mittelpunktes O unteren Boden des Gehäuses 5 stoffschlüssig verbunden. Die stoffschlüssige Verbindung erfolgt durch Schweissen, Diffusionsschweissen, Thermokompressionsbonden, Löten, usw.. In einem weiteren Verfahrensschritt wird die Abdeckung 6 auf einen bezüglich des Mittelpunktes O oberen Rand des Gehäuses 5 gesetzt und mit dem Gehäuse 5 stoffschlüssig verbunden. Auch die stoffschlüssige Verbindung erfolgt durch Schweissen, Diffusionsschweissen, Thermokompressionsbonden, Löten, usw..

Bezüglich des Mittelpunktes O endseitig auf der Horizontalachse CC' weist das Gehäuse 5 eine Öffnung 50 auf. Durch die Öffnung sind die Masseelemente 30, 30' von ausserhalb des Gehäuses 5 zugänglich. In einem weiteren Verfahrensschritt werden elektrische Kontaktelemente 7, 7' mit den Masseelemente 30, 30' elektrisch und mechanisch verbunden. Die elektrischen Kontaktelemente 7, 7' sind zylindrisch und bestehen aus elektrisch leitfähigem Material wie aus Reinmetallen, Nickellegierungen, Kobaltlegierungen, Eisenlegierungen, usw.. Die elektrische und mechanische Verbindung erfolgt durch Stoffschluss wie Schweissen, Diffusionsschweissen, Thermokompressionsbonden, Löten, usw.. In der Ausführung nach Fig. 7 und 8 sind die elektrischen Kontaktelemente 7, 7' kurze Drähte, die von einer Oberfläche der Masseelemente 30, 30' in den Bereich der Öffnung 50 reichen. Kurze Drähte haben den Vorteil, dass sie mechanischen Belastungen im Einsatz sehr gut widerstehen und somit langlebig und zudem kostengünstig sind.

Das Beschleunigungs-Messgerät 1 ist über ein Signalkabel 8 mit einer nicht dargestellten Auswerteeinheit elektrisch verbindbar. In der Auswerteeinheit lassen sich die Beschleunigungssignale elektrisch verstärken und auswerten. Das Signalkabel 8 weist einen Signalkabelmantel und zwei elektrische Signalleiter 80, 80' auf. Der Signalkabelmantel schützt die elektrischen Signalleiter 80, 80' vor schädlichen Umwelteinflüssen wie Verunreinigungen (Staub, Feuchtigkeit, usw.). Der Signalkabelmantel kann eine koaxiale elektromagnetische Abschirmung aufweisen und die Signalleiter vor elektrischen und elektromagnetischen Störeffekten in Form von elektromagnetischer Strahlung schützen. Die elektrischen Signalleiter 80, 80' bestehen aus elektrisch leitfähigem Material wie aus Reinmetallen, Nickellegierungen, Kobaltlegierungen, Eisenlegierungen, usw.. Die bezüglich des Mittelpunktes O vorderen Enden der elektrischen Signalleiter 80, 80' werden mit den elektrischen Kontaktelementen 7, 7' elektrisch und mechanisch verbunden. Beliebige elektrische und mechanische Verbindungen wie Stoffschluss, Formschluss und Kraftschluss sind möglich. Somit sind die die elektrischen Signalleiter 80, 80' indirekt mit den Masseelementen 30, 30' elektrisch und mechanisch verbunden. Beschleunigungssignale werden indirekt von den Masseelementen 30, 30' über die elektrischen Kontaktelemente 7, 7' auf die elektrischen Signalleiter 80, 80' elektrisch abgeleitet. Bei Kenntnis der vorliegenden Erfindung kann der Fachmann die elektrischen Kontaktelemente und die elektrischen Signalleiter auch einstückig gestalten und die elektrischen Signalleiter direkt mit den Masseelementen elektrisch und mechanisch verbinden. Beschleunigungssignale werden dann von den Masseelementen direkt auf elektrischen Signalleiter elektrisch abgeleitet.

Das Beschleunigungs-Messgerät 1 weist eine Schutzhülse 9 auf. Die Schutzhülse 9 ist hohlzylinderförmig und besteht aus bestehen aus mechanisch beständigem Material wie aus Reinmetallen, Nickellegierungen, Kobaltlegierungen, Eisenlegierungen, Kunststoff, Keramik, usw.. In weiteren Verfahrensschritten wird mit der Schutzhülse 9 die Öffnung 50 abgedichtet und das Signalkabel 8 zugentlastet. Dazu wird die Schutzhülse 9 wie in Fig. 8 und 9 dargestellt, über das Signalkabel 8 geschoben. Nachdem die elektrische und mechanische Verbindung der elektrischen Signalleiter mit den elektrischen Kontaktelementen 7, 7' realisiert ist, wird die Schutzhülse 9 gegen das Gehäuse 5 geschoben, was in Fig. 9 mit einem Pfeil gekennzeichnet ist. Die Schutzhülse weist einen Teller 90 und ein Rohr 91 auf. Teller 90 und Rohr 91 sind einstückig. Ein Durchmesser des Tellers 90 ist so dimensioniert, dass der Teller 90 die Öffnung 50 vollständig verschliessen kann. Ein radial äusserer Rand des Tellers 90 wird nun mechanisch mit dem Gehäuse 5 verbunden. Die mechanische Verbindung erfolgt durch Stoffschluss wie Schweissen, Diffusionsschweissen, Thermokompressionsbonden, Löten, usw.. Die mechanische Verbindung dichtet die Öffnung 50 gasdicht ab. Auch ist ein Durchmesser des Rohres 91 so dimensioniert, dass er geringfügig grösser als ein Aussendurchmesser des Signalkabelmantels ist. Rohr 91 und Signalkabelmantel werden nun mechanisch miteinander verbunden. Die mechanische Verbindung erfolgt durch Stoffschluss wie Kleben, Löten, usw.. oder durch Kraftschluss wie Crimpen, Klemmen, usw.. Die mechanische Verbindung bildet eine Zugentlastung der elektrischen und mechanischen Verbindung der elektrischen Signalleiter werden mit den elektrischen Kontaktelementen 7, 7'.

Die Bestandteile des Beschleunigungs-Messgerätes 1 sind so beschaffen, dass eine Betriebstemperatur von -70°C bis +700°C reicht. Als Material für das Gehäuse 5, die Abdeckung 6, die Masseelemente 30, 30', die Elektroden 22, 22', die Vorspannanordnung 4 werden daher vorzugsweise Nickellegierungen mit den Werkstoffnummern 2.4969 oder 2.4632 verwendet.

### Bezugszeichenliste

- AA': Vertikalachse
- BB': Längsachse
- CC': Horizontalachse
- O: Mittelpunkt
- 1: Beschleunigungs-Messgerät
- 2: piezoelektrisches System
- 3: seismische Masse
- 4: Vorspannanordnung
- 5: Gehäuse
- 6: Abdeckung
- 7, 7': elektrisches Kontaktelement
- 8: Signalkabel
- 9: Schutzhülse
- 10: piezoelektrische Aufnehmergruppe
- 20, 20': Systemelement
- 21, 21': elektrisches Isolatorelement
- 22, 22': Elektrode
- 23, 23', 23": piezoelektrisches Element
- 24, 24': Ende der Elektrode
- 30, 30': Masseelement
- 31: elektrische Isolation
- 32, 32': Aussparung
- 40, 40': Kappe
- 41: Hülse
- 42: Befestigungselement
- 43, 43': Schweissnaht
- 50: Öffnung
- 80, 80': elektrischer Signalleiter
- 90: Teller
- 91: Rohr

## Patentansprüche

1. Beschleunigungs-Messgerät (1) mit einem piezoelektrischen System (2), einer seismischen Masse (3) und eine Vorspannanordnung (4); bei Beschleunigung übt die seismische Masse (3) eine ihrer Beschleunigung proportionale Kraft auf das piezoelektrische System (2) aus, welche Kraft im piezoelektrischen System (2) piezoelektrische Ladungen erzeugt, und welche piezoelektrischen Ladungen als Beschleunigungssignale elektrisch abgreifbar sind, wobei das piezoelektrische System (2) zwei Systemelemente (20, 20') aufweist; wobei die seismische Masse (3) zwei Masseelemente (30, 30') aufweist; wobei die Vorspannanordnung (4) die Systemelemente (20, 20') gegen die Masseelemente (30, 30') mechanisch vorspannt, **dadurch gekennzeichnet, dass** die Vorspannanordnung (4) unter mechanischer Vorspannung im direkten mechanischen Kontakt mit den Systemelementen (20, 20') ist.

2. Beschleunigungs-Messgerät (1) nach Anspruch 1, **dadurch gekennzeichnet, dass** die Systemelemente (20, 20'), die Masseelemente (30, 30') und die Vorspannanordnung (4) eine piezoelektrische Aufnehmergruppe (10) bilden.

3. Beschleunigungs-Messgerät (1) nach einem der Ansprüche 1 oder 2, **dadurch gekennzeichnet, dass** jedes Systemelement (20, 20') ein elektrisches Isolatorelement (21, 21') aufweist; und dass die Vorspannanordnung (4) unter mechanischer Vorspannung im flächigen Kontakt mit den elektrischen Isolatorelementen (21, 21') ist.

4. Beschleunigungs-Messgerät (1) nach einem der Ansprüche 1 bis 3, **dadurch gekennzeichnet, dass** die Vorspannanordnung (4) zwei Kappen (40, 40') und eine Hülse (41) aufweist; dass die Kappen (40, 40') und die Hülse (41) über die seismische Masse (3) gelegt sind; und dass die übergelegten Kappen (40, 40') unter mechanischer Vorspannung mit der übergelegten Hülse (41) stoffschlüssig verbunden sind.

5. Beschleunigungs-Messgerät (1) nach einem der Ansprüche 1 bis 4, **dadurch gekennzeichnet, dass** die Systemelemente (20, 20') in Aussparungen (32, 32') der Masseelemente (30, 30') angeordnet sind.

6. Beschleunigungs-Messgerät (1) nach einem der Ansprüche 1 bis 5, **dadurch gekennzeichnet, dass** das die Masseelemente (30, 30') mittels einer elektrischen Isolation (31) gegeneinander elektrisch isoliert sind.

7. Beschleunigungs-Messgerät (1) nach einem der Ansprüche 1 bis 6, **dadurch gekennzeichnet, dass** das jedes Systemelement (20, 20') eine positive Elektrode (22) und eine negative Elektrode (22') aufweist; dass die positive Elektrode (22) positive piezoelektrische Ladungen aufnimmt; dass die negative Elektrode (22') negative piezoelektrische Ladungen aufnimmt; dass die positive Elektrode (22) mit einem ersten Masseelement (30) elektrisch und mechanisch verbunden ist; dass die negative Elektrode (22') mit einem zweiten Masseelement (30') elektrisch und mechanisch verbunden ist; und dass an den Masseelementen (30, 30') piezoelektrischen Ladungen als Beschleunigungssignale elektrisch abgreifbar sind.

8. Beschleunigungs-Messgerät (1) nach Anspruch 7, **dadurch gekennzeichnet, dass** Beschleunigungs-Messgerät (1) ein Gehäuse (5) mit einer Öffnung (50) aufweist; und dass die Masseelemente (30, 30') durch die Öffnung (50) elektrisch und mechanisch mit einem Signalkabel (8) verbunden sind.

9. Beschleunigungs-Messgerät (1) nach Anspruch 8, **dadurch gekennzeichnet, dass** das Signalkabel (8) zwei elektrische Signalleiter (80, 80') aufweist; dass die elektrischen Signalleiter (80, 80') direkt oder indirekt mit den Masseelementen (30, 30') elektrisch und mechanisch verbunden sind; und dass die elektrischen Signalleiter (80, 80') Beschleunigungssignale von den Masseelementen (30, 30') elektrisch ableiten.

10. Beschleunigungs-Messgerät (1) nach einem der Ansprüche 7 bis 9, **dadurch gekennzeichnet, dass** jede Elektrode (22, 22') mehrere Elektrodenflächen aufweist, die über Gelenke mechanisch miteinander verbunden sind; und dass jede Elektrode (22, 22') mit den Elektrodenflächen piezoelektrische Ladungen von mehreren piezoelektrischen Elementen (23, 23', 23") sammelt.

11. Verfahren zur Herstellung eines Beschleunigungs-Messgerät (1) nach einem der Ansprüche 1 bis 10, wobei die Systemelemente (20, 20') zwischen den Masseelementen (30, 30') angeordnet werden, **dadurch gekennzeichnet, dass** zwei Kappen (40, 40') und eine Hülse (41) der Vorspannanordnung (4) über die seismische Masse (3) gelegt werden; und dass die übergelegten Kappen (40, 40') unter mechanischer Vorspannung mit der übergelegten Hülse (41) stoffschlüssig verbunden werden.

12. Verfahren nach Anspruch 11, **dadurch gekennzeichnet, dass** die Systemelemente (20, 20'), die Masseelemente (30, 30') und die Vorspannanordnung (4) eine piezoelektrische Aufnehmergruppe (10) bilden und dass die piezoelektrische Aufnehmergruppe (10) in ein Gehäuse (5) des Beschleunigungs-Messgerätes (1) gesetzt wird; dass die Vorspannanordnung (4) mit einem Boden des Gehäuses (5) stoffschlüssig verbunden wird; dass eine Abdeckung (6) des Beschleunigungs-Messgerätes (1) auf einen oberen Rand des Gehäuses (5) gesetzt wird; und dass die Abdeckung (6) mit dem oberen Rand des Gehäuses (5) stoffschlüssig verbunden wird.

13. Verfahren nach einem der Ansprüche 11 oder 12, **dadurch gekennzeichnet, dass** die Systemelemente (20, 20') mit den Masseelementen (30, 30') elektrisch verbunden werden; dass ein Gehäuse (5) des Beschleunigungs-Messgerätes (1) eine Öffnung (50) aufweist und dass die Masseelemente (30, 30') durch die Öffnung (50) elektrisch und mechanisch mit einem Signalkabel (8) verbunden werden.

## Claims

1. An acceleration measuring device (1) comprising a piezoelectric system (2), a seismic mass (3), and a preloading assembly (4); wherein during acceleration the seismic mass (3) exerts a force proportional to its acceleration onto the piezoelectric system (2) said force generating piezoelectric charges in the piezoelectric system (2), and wherein said piezoelectric charges can be electrically picked up as the acceleration signals, wherein said piezoelectric system (2) comprises two system elements (20, 20'); wherein said seismic mass (3) comprises two mass elements (30, 30'); and wherein the preloading assembly (4) mechanically preloads the system elements (20, 20') against the mass elements (30, 30'), **characterized in that** under mechanical preload the preloading assembly (4) is in direct mechanical contact to the system elements (20, 20').

2. The acceleration measuring device (1) according to claim 1, **characterized in that** the system elements (20, 20'), the mass elements (30, 30'), and the preloading assembly (4) form a piezoelectric transducer assembly (10).

3. The acceleration measuring device (1) according to any of claims 1 or 2, **characterized in that** each system element (20, 20') comprises an electrical insulator element (21, 21'); and **in that** under mechanical preload the preloading assembly (4) is in surface contact to the electrical insulator elements (21, 21').

4. The acceleration measuring device (1) according to any of claims 1 to 3, **characterized in that** the preloading assembly (4) comprises two covers (40, 40') and a sleeve (41); said covers (40, 40') and sleeve (41) being placed over the seismic mass (3); and **in that** the covers (40, 40') being placed over the seismic mass (3) are material-bonded to the sleeve (41) being placed over the seismic mass (3) under mechanical preload.

5. The acceleration measuring device (1) according to any of claims 1 to 4, **characterized in that** the system elements (20, 20') are arranged in recesses (32, 32') of the mass elements (30, 30').

6. The acceleration measuring device (1) according to any of claims 1 to 5, **characterized in that** the mass elements (30, 30') are electrically insulated against each other by means of an electrical insulation (31).

7. The acceleration measuring device (1) according to any of claims 1 to 6, **characterized in that** each system element (20, 20') comprises a positive electrode (22) and a negative electrode (22'); the positive electrode (22) receives positive piezoelectric charges; the negative electrode (22') receives negative piezoelectric charges; said positive electrode (22) being electrically and mechanically connected to a first mass element (30); said negative electrode (22') being electrically and mechanically connected to a second mass element (30'); and **in that** piezoelectric charges can be picked up as acceleration signals at the mass elements (30, 30').

8. The acceleration measuring device (1) according to claim 7, **characterized in that** said acceleration measuring device (1) comprises a housing (5) having an opening (50); and **in that** the mass elements (30, 30') are electrically and mechanically connected to a signal cable (8) through said opening (50).

9. The acceleration measuring device (1) according to claim 8, **characterized in that** the signal cable (8) comprises two electrical signal conductors (80, 80'); said electrical signal conductors (80, 80') being directly or indirectly electrically and mechanically connected to the mass elements (30, 30'); and wherein said electrical signal conductors (80, 80') electrically transmit acceleration signals from the mass elements (30, 30').

10. The acceleration measuring device (1) according to any of claims 7 to 9, **characterized in that** each electrode (22, 22') comprises a plurality of electrode surfaces that are mechanically connected to one another by hinges; and **in that** by means of said electrode surfaces each electrode (22, 22') collects piezoelectric charges from a plurality of piezoelectric elements (23, 23', 23").

11. A method for manufacturing an acceleration measuring device (1) according to any of claims 1 to 10, wherein the system elements (20, 20') are arranged between the mass elements (30, 30'), **characterized in that** two covers (40, 40') and a sleeve (41) of the preloading assembly (4) are placed over the seismic mass (3); and **in that** the covers (40, 40') being placed over the seismic mass (3) are material-bonded to the sleeve (41) being placed over the seismic mass (3) under mechanical preload.

12. The method according to claim 11, **characterized in that** the system elements (20, 20'), mass elements (30, 30'), and preloading assembly (4) form a piezoelectric transducer assembly (10), and said piezoelectric transducer assembly (10) is introduced in a housing (5) of the acceleration measuring device (1); wherein said preloading assembly (4) is material-bonded to a bottom portion of the housing (5); a cover (6) of the acceleration measuring device (1) is mounted on an upper edge of the housing (5); and said cover (6) is material-bonded to the upper edge of the housing (5) .

13. The method according to any of claims 11 or 12, **characterized in that** the system elements (20, 20') are electrically connected to the mass elements (30, 30'); a housing (5) of the acceleration measuring device (1) has an opening (50); and **in that** the mass elements (30, 30') are electrically and mechanically connected to a signal cable (8) through said opening (50).

## Revendications

1. Appareil de mesure d'accélération (1) comportant un système piézoélectrique (2), une masse sismique (3) et un agencement de précontrainte (4); lors d'une accélération, la masse sismique (3) exerce une force proportionnelle à son accélération sur le système piézoélectrique (2), ladite force générant des charges piézoélectriques dans le système piézoélectrique (2), et lesdites charges piézoélectriques pouvant être prélevées électriquement sous forme de signaux d'accélération, dans lequel ledit système piézoélectrique (2) comporte deux éléments de système (20, 20'); ladite masse sismique (3) comporte deux éléments de masse (30, 30'); l'agencement de précontrainte (4) précontraint mécaniquement les éléments de système (20, 20') contre les éléments de masse (30, 30'), **caractérisé en ce que** l'agencement de précontrainte (4), sous précontrainte mécanique, est en contact mécanique direct avec lesdits éléments de système (20, 20').

2. Appareil de mesure d'accélération (1) selon la revendication 1, **caractérisé en ce que** les éléments de système (20, 20'), les éléments de masse (30, 30') et l'agencement de précontrainte (4) constituent un assemblage de capteur piézoélectrique (10).

3. Appareil de mesure d'accélération (1) selon l'une quelconque des revendications 1 ou 2, **caractérisé en ce que** chaque élément de système (20, 20') comporte un élément électriquement isolant (21, 21'); et **en ce que** l'agencement de précontrainte (4) dans l'état précontraint mécaniquement est en contact surface contre surface avec les éléments électriquement isolants (21, 21').

4. Appareil de mesure d'accélération (1) selon l'une quelconque des revendications 1 à 3, **caractérisé en ce que** l'agencement de précontrainte (4) comporte deux capuchons (40, 40') et une gaine (41); **en ce que** les capuchons (40, 40') et la gaine (41) sont superposés à la masse sismique (3); et **en ce que** les capuchons (40, 40') superposés sont reliés par adhérence de matière sous précontrainte mécanique à la gaine (41) superposée.

5. Appareil de mesure d'accélération (1) selon l'une quelconque des revendications 1 à 4, **caractérisé en ce que** les éléments de système (20, 20') sont disposés dans des évidements (32, 32') des éléments de masse (30, 30').

6. Appareil de mesure d'accélération (1) selon l'une quelconque des revendications 1 à 5, **caractérisé en ce que** les éléments de masse (30, 30') sont isolés électriquement l'un de l'autre par l'intermédiaire d'un isolant électrique (31).

7. Appareil de mesure d'accélération (1) selon l'une quelconque des revendications 1 à 6, **caractérisé en ce que** chaque élément de système (20, 20') comporte une électrode positive (22) et une électrode négative (22'); **en ce que** l'électrode positive (22) reçoit les charges piézoélectriques positives; **en ce que** l'électrode négative (22') reçoit les charges piézoélectriques négatives; **en ce que** l'électrode positive (22) est reliée électriquement et mécaniquement à un premier élément de masse (30); **en ce que** l'électrode négative (22') est reliée électriquement et mécaniquement à un second élément de masse (30'); et **en ce qu'**aux éléments de masse (30, 30') les charges piézoélectriques peuvent être prélevées en tant que signaux d'accélération.

8. Appareil de mesure d'accélération (1) selon la revendication 7, **caractérisé en ce que** ledit appareil de mesure d'accélération (1) comporte un boîtier (5) avec une ouverture (50); et **en ce qu'**à travers l'ouverture (50) les éléments de masse (30, 30') sont reliés électriquement et mécaniquement à un câble de signal (8).

9. Appareil de mesure d'accélération (1) selon la revendication 8, **caractérisé en ce que** le câble de signal (8) comporte deux conducteurs des signaux électriques (80, 80'); **en ce que** les conducteurs des signaux électriques (80, 80') sont reliés électriquement et mécaniquement de manière directe ou indirecte aux éléments de masse (30, 30'); et **en ce que** les conducteurs des signaux électriques (80, 80') transmettent électriquement les signaux d'accélération reçus des éléments de masse (30, 30').

10. Appareil de mesure d'accélération (1) selon l'une quelconque des revendications 7 à 9, **caractérisé en ce que** chaque électrode (22, 22') comporte plusieurs faces d'électrode qui sont reliées l'une à l'autre mécaniquement via des articulations; et **en ce que** chaque électrode (22, 22') avec ses faces d'électrode recueille des charges piézoélectriques d'une pluralité d'éléments piézoélectriques (23, 23', 23").

11. Procédé pour la fabrication d'un appareil de mesure d'accélération (1) selon l'une quelconque des revendications 1 à 10, dans lequel les éléments de système (20, 20') sont disposés entre les éléments de masse (30, 30'), **caractérisé en ce que** deux capuchons (40, 40') et une gaine (41) de l'agencement de précontrainte (4) sont superposés à la masse sismique (3); et **en ce que** les capuchons (40, 40') superposés sont reliés par adhérence de matière sous précontrainte mécanique à la gaine (41) superposée.

12. Procédé selon la revendication 11, **caractérisé en ce que** les éléments de système (20, 20'), les éléments de masse (30, 30') et l'agencement de précontrainte (4) constituent un assemblage de capteur piézoélectrique (10) et **en ce que** l'assemblage de capteur piézoélectrique (10) est introduit dans un boîtier (5) de l'appareil de mesure d'accélération (1); **en ce que** l'agencement de précontrainte (4) est relié au fond du boîtier (5) par adhérence de matière, **en ce qu'**un couvercle (6) de l'appareil de mesure d'accélération (1) est positionné sur un bord supérieur du boîtier (5); et **en ce que** ledit couvercle (6) est relié au bord supérieur du boîtier (5) par adhérence de matière.

13. Procédé selon l'une quelconque des revendications 11 ou 12, **caractérisé en ce que** les éléments de système (20, 20') sont reliés électriquement aux éléments de masse (30, 30'); **en ce qu'**un boîtier (5) de l'appareil de mesure d'accélération (1) comporte une ouverture (50) et ce qu'à travers l'ouverture (50) les éléments de masse (30, 30') sont reliés électriquement et mécaniquement à un câble de signal (8).
